# EUROPEAN PATENT SPECIFICATION

(11) **EP 2 230 902 B1**
(45) Date of publication and mention of the grant of the patent: **12.09.2018**
(21) Application number: 08861455.7
(22) Date of filing: 05.12.2008
(51) Int. Cl.: A01M 23/24, A01M 23/36

(54) **RODENT TRAP HAVING A PIVOTING PLATFORM**
FALLE FÜR NAGETIERE MIT EINER SCHWENKPLATTFORM
PIÈGE À RONGEUR À PLATEFORME PIVOTANTE

(30) Priority: 14.12.2007 US 956929
(43) Date of publication of application: 29.09.2010
(73) Proprietor: OMS Investments, Inc., Los Angeles, CA 90067 (US)
(72) Inventor: NATHAN, Philip, Litchfield, CT 06759 (US); PHILLIPS, Matthew L., Litchfield, CT 06759 (US); BRIGGS, Lynn, Bristol, CT 06010 (US); DANNIGER, Thomas Paul, Ostrander, OH 43061 (US); FOSTER, Richard Gene, Powell, OH 43065 (US)
(74) Representative: Beyer, Andreas
(86) International application number: PCT/US2008/085683
(87) International publication number: WO 2009/079237

(56) References cited:
- GB-A- 2 095 526
- US-A- 1 747 380
- US-A- 2 160 986
- US-A- 2 581 327
- US-A- 4 685 245
- US-B1- 6 543 179

## Description

### FIELD OF THE INVENTION

The present embodiments relate to animal traps in general, and more particularly to rodent traps having a pivoting platform, which when triggered, traps and contains the rodent within the trap.

### BACKGROUND INFORMATION

Conventional animal traps are not always self contained. In other words, in conventional traps the trapping mechanism, and therefore the trapped animal, are open to the environment so that they are visible to and accessible from the environment. For example, in conventional rodent traps having a spring loaded wicket trap or "glue trap," the "trapped" rodent is visible. When the rodent is trapped, it is often still alive. Thus making disposal of the trap difficult and uncomfortable for some people. In addition, because these type of traps are not self-contained children and/or pets may accidentally trigger the traps and/or get caught in the trap. For example, a dog may attempt to eat the bait on the spring loaded wicket trap and have the wicket come down on the dog's snout. With respect to glue traps, a child may step on the trap and have a difficult time removing the trap and/or glue. These and other problems exist with conventional traps.

The description herein of certain advantages and disadvantages of known methods and devices is not intended to limit the scope of the present invention. Indeed the present embodiments may include some or all of the features described above without suffering from the same disadvantages.
US 2,581,327 discloses a rodent trap comprising an elongated casing having an open entrance end and including a bottom wall, a top wall and side walls, a trap jaw swingeably disposed in said casing and journaled in said side walls including an impaling bar spaced from the journal of the jaw and disposed substantially parallel thereto, the bottom wall of said casing including an integral hinged tongue having a hinged end disposed remote to the entrance end of the casing, said tongue having an opening therein, said trap jaw having a detent projecting at an angle from the impaling bar and resilient means anchored to a portion of the casing and connected to the jaw and urging the jaw to swing in a direction for displacing the impaling bar toward the top wall of the casing, said tongue forming a treadle and being displaceable upwardly for engaging said detent in the opening thereof for latching the jaw in a retracted set position with said resilient means under tension and the impaling bar adjacent the bottom of the casing.

### SUMMARY OF THE INVENTION

In view of the foregoing, the invention is directed to a trap according to claim 1. Specific embodiments are laid down in the dependent claims and this description.
The trap securely traps a rodent, such as a mouse, within an enclosure. The enclosure can have limited external accessibility and visibility, thus the trap and rodent can be disposed of without seeing and/or touching the rodent.

The trap has a housing with an entrance that provides a passageway into the housing, a platform pivotally coupled to the housing, and a trigger that, when triggered by a rodent, triggers the platform to trap the rodent against the housing.

The trap has a housing that has a plurality of walls and at least one entrance providing a passageway into the housing, a platform pivotally coupled to the housing, and a trigger operatively coupled to the platform, the trigger having a latched position in which the platform is adjacent to the entrance and a triggered position in which the platform is biased towards a wall.

At least one embodiment provides a trap having a housing that has a top, a bottom, a first side wall, a second side wall, a back wall, and an entrance providing a passageway into the housing, at least one numbing finger coupled to the housing with each numbing finger extending laterally towards the entrance, a platform pivotally coupled to the housing and residing above the bottom of the housing and adjacent to the entrance in a set position, a biasing element biasing the platform towards the back wall, and a trigger that, when triggered by a rodent, releases the platform to pivot from the set position towards the rear wall to trapping the rodent between the platform and at least one numbing finger.

### BRIEF DESCRIPTION OF THE DRAWINGS

In order to facilitate a fuller understanding of the exemplary embodiments, reference is now made to the appended drawings. These drawings should not be construed as limiting, but are intended to be exemplary only.
Figure 1 depicts a perspective view of a trap in accordance with a preferred exemplary embodiment;
Figure 2 depicts a perspective view of a trap, without a sidewall, in accordance with a preferred exemplary embodiment;
Figure 3A depicts a perspective view of a trap having a biasing element in accordance with a preferred exemplary embodiment;
Figure 3B depicts a perspective view of a trap and a biasing element in accordance with a preferred exemplary embodiment;
Figure 4 depicts a perspective view of the platform and a trigger in accordance with a preferred exemplary embodiment;
Figure 5A depicts a side view of a trap in between the latched position and the unlatched position in accordance with a preferred exemplary embodiment;
Figure 5B depicts a side view of a trap in the unlatched position in accordance with a preferred exemplary embodiment;
Figure 6 depicts a perspective view of a trap in accordance with an exemplary embodiment;
Figure 7 depicts a perspective view of a platform in accordance with an exemplary embodiment;
Figure 8 depicts a side view of a trap in the unlatched position in accordance with an n exemplary embodiment;
Figure 9 depicts a side view of a platform in the latched position in accordance with an exemplary embodiment;
Figure 10 depicts a perspective view of a catch in accordance with an exemplary embodiment;
Figure 11 depicts a perspective view of a trigger in accordance with an exemplary embodiment;
Figure 12 depicts a side view of a trap, in the latched position, having a blister pack in accordance with an exemplary embodiment; and
Figure 13 depicts a side view of a trap, in the unlatched position, having a bait trap in accordance with an exemplary embodiment.

### DETAILED DESCRIPTION OF EMBODIMENTS

The following description is intended to convey a thorough understanding of the embodiments by providing a number of specific embodiments and details involving an animal trap. It is understood, however, that the invention is not limited to these specific embodiments and details, which are exemplary only. It is further understood that one possessing ordinary skill in the art, in light of known devices, systems and methods, would appreciate the use of the invention for its intended purposes and benefits in any number of alternative embodiments in the scope of the appended claims.

Generally speaking, the animal traps of the various exemplary embodiments described herein have a housing having an entrance providing a passageway into the housing, a platform coupled to the housing, and a trigger, which when an animal, such as a mouse, triggers the triggers, the platform and mouse move towards the housing and traps the mouse against the housing.

The various exemplary embodiments generally described devices that "trap" an animal, e.g., a mouse. In the various embodiments, the animal may simply be trapped inside the device so that it cannot escape from the device. However, the embodiments are not so limited. In various embodiments, the trapped animal may be immobilized, injured or killed. For example, in various exemplary embodiments, the trapped animal may be immobilized inside the device by the device itself or by one or more numbing fingers inside the device. Where the trapped animal is a mouse, immobilizing the mouse may cause the mouse to develop hypothermia which may eventually kill the mouse. In other embodiments, the device may injure the trapped animal, such as by crushing it, or impaling it. In other embodiments, the trapped animal may suffer a fatal injury, such as a broken neck.

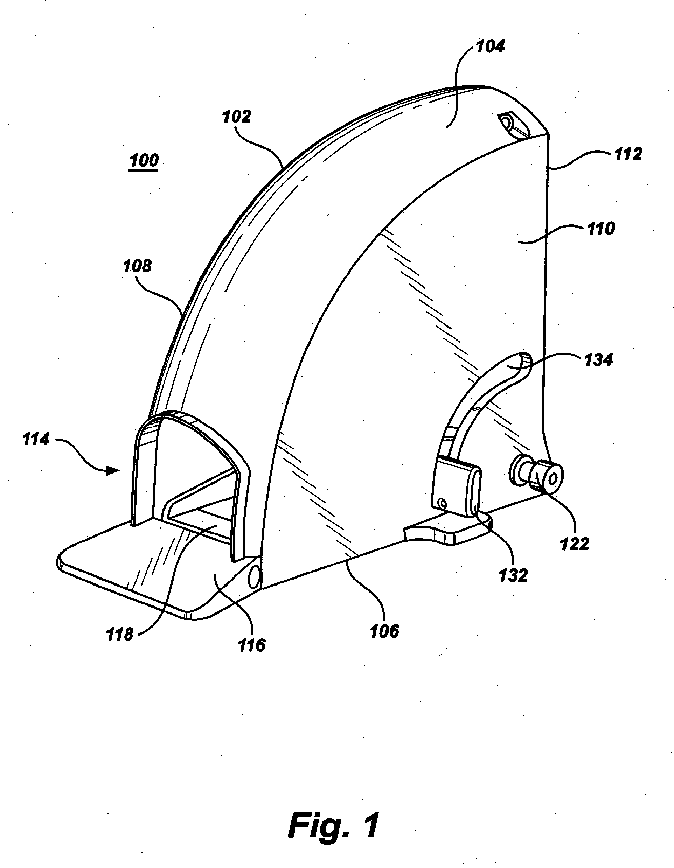

Referring to Figure 1, a perspective view of a trap in accordance with a preferred exemplary embodiment is illustrated. It should be appreciated that trap 100 is a simplified view of a preferred trap and may include additional elements that are not depicted. As shown, the trap 100 may include a housing 102. The housing 102 may include a top wall 104, a bottom 106 or base, a first side wall 108, a second side wall 110, and a back wall 112. Although the housing 102 is depicted as comprising one piece, the housing 102 may comprise multiple pieces. The top wall 104 may be rounded and extend from the back wall 112 towards the front of the housing 102. The housing 102 may include an entrance 114, e.g., a passageway into the housing 102. For example, the top wall 104 may form an entrance 114 at a location which is close to or at the junction where the top wall 104 meets the bottom 106 of the housing 102. The first side wall 108 and second side wall 110 may be positioned on the longer, opposite sides of the bottom 106. The back wall 112 and entrance 114 may be positioned on the narrower, opposite sides of the bottom 106. The housing 102 may include a ramp 116 at or near the entrance 114. The ramp 116 may be angled at a first end and terminate at a second end such that the higher end of the ramp 116 is approximately flush with a platform 118 which may be adjacent to the ramp 116. The incline of the ramp 124 may assist in attracting an animal to enter the trap 100.

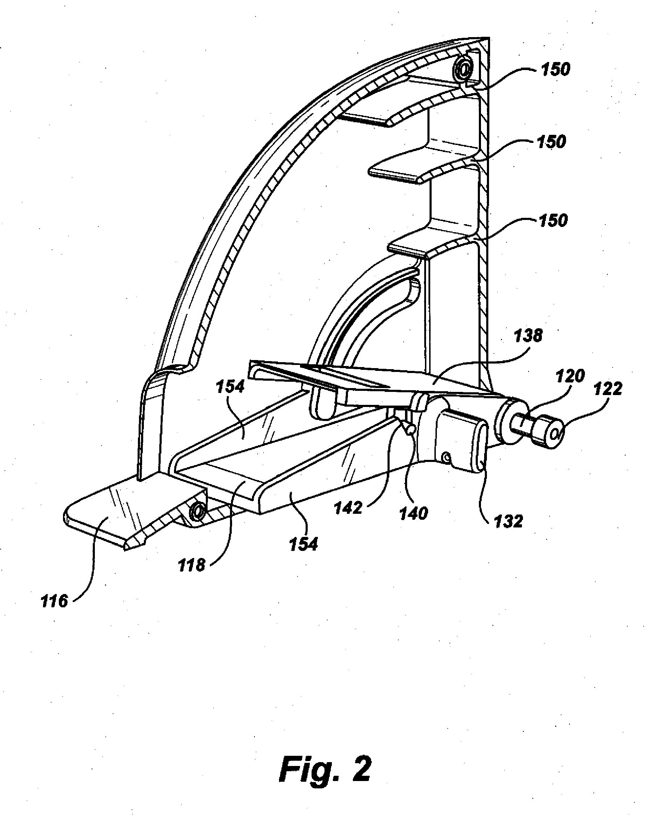

Referring to Figure 2, a perspective view of the trap, without a sidewall, in accordance with a preferred embodiment is illustrated. As shown, the trap 100 may include a platform 118 pivotally coupled to the housing 102. A pivoting element may pivotally couple the platform 118 to the housing 102. For example, the pivoting element may include a rod 120 having one or two threaded ends. The platform 118 may include a slot (not shown) to receive the rod 120. The threaded ends of the rod 120 may extend beyond the first and second sidewalls, 108, 110. A nut 122 may secure each threaded end of the rod 120 to the housing 102. In other embodiments, a screw may be used in conjunction with or in place of the rod 120. In such an embodiment, the screw head and a nut 122 on the threaded end of the screw may secure the screw to the housing 102. In other embodiments, other pivoting elements may be used to pivotally couple the platform 118 to the housing 102.

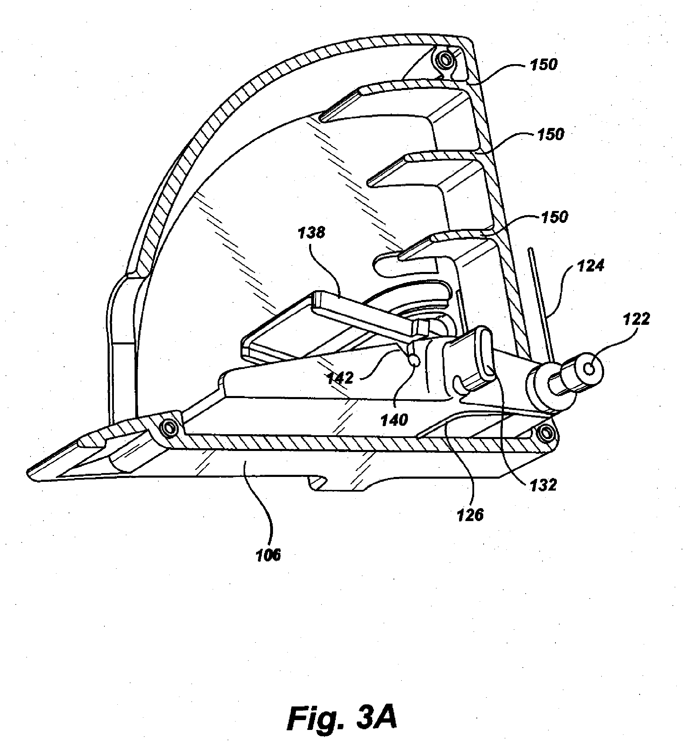

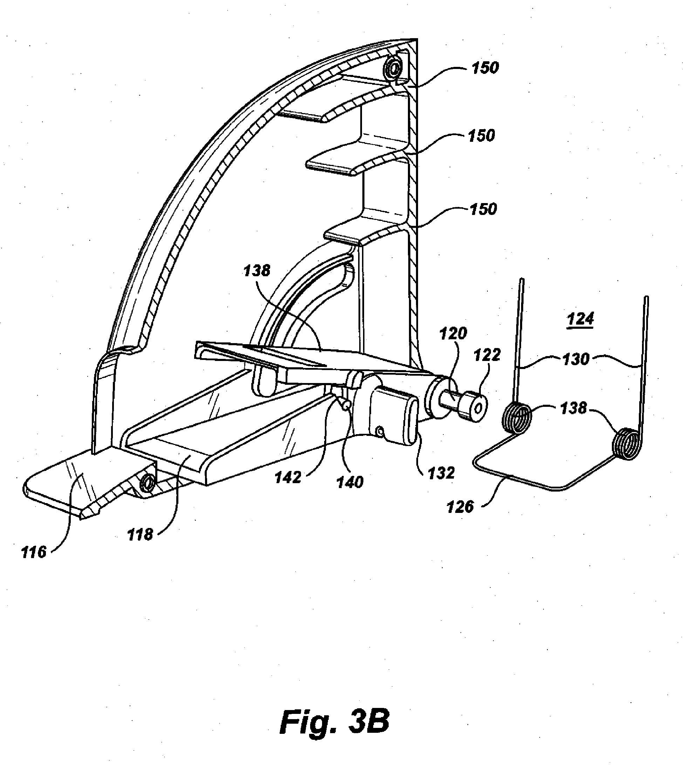

Referring to Figures 3A and 3B, perspective views of the trap having a biasing element in accordance with a preferred embodiment are illustrated. The biasing element 124 may bias the platform 118 towards the back wall 112 of the housing 102. As shown, the biasing element 124 may be a torsion spring. Specifically, the torsion spring 124 may be a double segmented torsion spring having a biased end 126, two coils 128, and two leverage ends 130. The biased end 126 may be positioned between the platform 120 and the bottom 106 of the housing 102. The coils 128 may form openings such that the coils 128 may receive the pivoting element, e.g., the rod 120, and couple the torsion spring 124 to the housing 102. The platform 118 may include one or more slots (not shown) to allow the coils 128 to reside in a position to receive the rod 120. The leverage ends 130 may be positioned within the housing 102 and may leverage the tension spring 124 against the back wall 112 of the housing 102. It is appreciated that a single segmented torsion spring having a single biased end 126, a single coil 128, and a single leverage end 130 may be used as well as other biasing elements which may bias the platform 118 towards the back wall 112 of the housing 102.

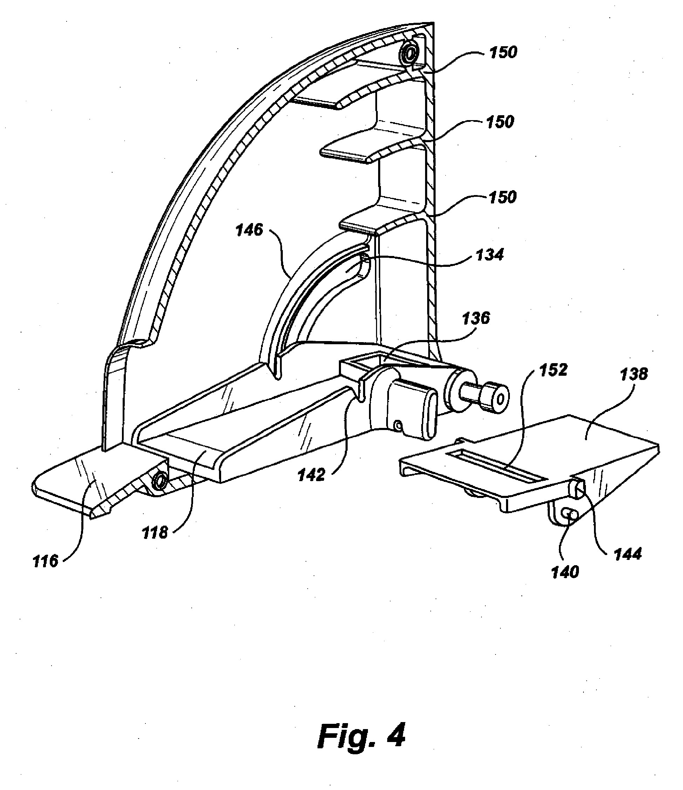

Referring to Figure 4, a perspective view of the platform and a trigger in accordance with a preferred embodiment is illustrated. As shown, the platform 118 may include sides 154 which may assist in positioning an animal on the platform 118 by directing the animal towards the center of the platform 118. The platform 118 may include a tab 132 to assist in moving the platform 118. The tab 132 may extend from the platform 118, e.g., from a side 154 of the platform. The tab 132 may be used to move the platform 118 from a triggered position, e.g., when the platform 118 is biased towards the rear wall 110, to a latched position, e.g., when the platform 118 is positioned on top of the bottom 106 of the housing 102 (adjacent to the entrance 114). The housing 102 may include one or more slots 134 or cutouts from which a tab 132 may extend from the interior of the housing 102 to the exterior of the housing 102. In other embodiments, multiple tabs 134 and multiple slots 134 may be used or other setting means may be used to move the platform 118 from the triggered position to the latched position. For example, the platform 118 may have tabs 132 that extend from two sides of the platform 118. In another example, a push bar (not shown) may have one end extend from the back wall 112 (via an aperture) with the other end coupled to the platform 118. By pushing on the push bar, the platform 118 may be moved from a triggered position to a latched position. In yet another example, a handle or lever (not shown) may have one end extend from the housing 102 (via an aperture) with the other end coupled to the platform 118. By moving the handle or lever from a first position to a second position, the platform 118 may be moved from a triggered position to a latched position.

The platform 118 may include an attractant reservoir 136 configured to hold an attractant (not shown). The attractant may be a scent, a rodenticide, and/or bait. The housing 102 may include an opening (not shown) to allow an attractant to be placed in the attractant reservoir 136. For example, the opening may allow a knife having food, e.g., peanut butter or cheese, to be placed in the attractant reservoir 136 to assist in attracting an animal, such as a mouse, to the trap 100. More specifically, the attractant may assist in attracting an animal onto the platform 118.

Referring to Figure 2 again, the trap 100 may include a trigger (or trigger mechanism) 138 operatively coupled to the platform 118. More specifically, the trigger 138 may be pivotally connected to the platform 118. For example, the trigger 138 may include mating projections 140 on each side of the trigger 138. The mating projections 140 may be adapted to mate with mating slots 142 on the platform 118. The mating projections 140 and mating slots 142 may interact to allow the trigger 138 to pivot with respect to the platform 118. In other embodiments, other coupling elements may be used to couple a trigger 138 to a platform 118 in which the triggering of the trigger 138 causes the platform 118 to move towards the back wall 112 of the housing 102. In other embodiments, the platform 118 may move towards a wall of the housing 112 or towards the housing 112 if the housing 112 does not have a "wall."

Referring to Figure 4 again, the trigger 138 may include one or more channel projections 144. Each channel projections 144 may extend from the side of the trigger 138 and may be adapted to interact with one or more corresponding channels 146 on the side walls 108, 110. In other embodiments, no guidance elements or other guidance elements may be used to assist in guiding the trigger 138 towards the back wall 112 of the housing 102.

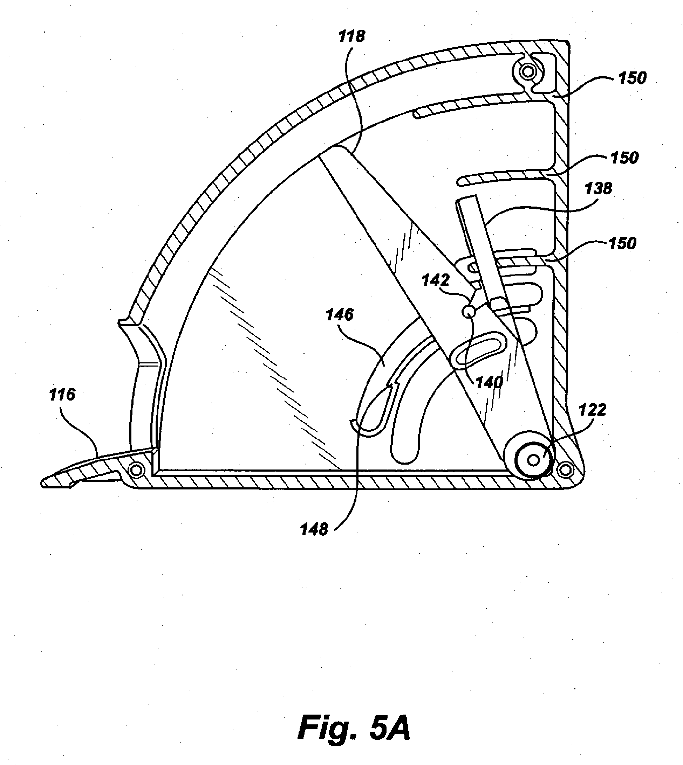

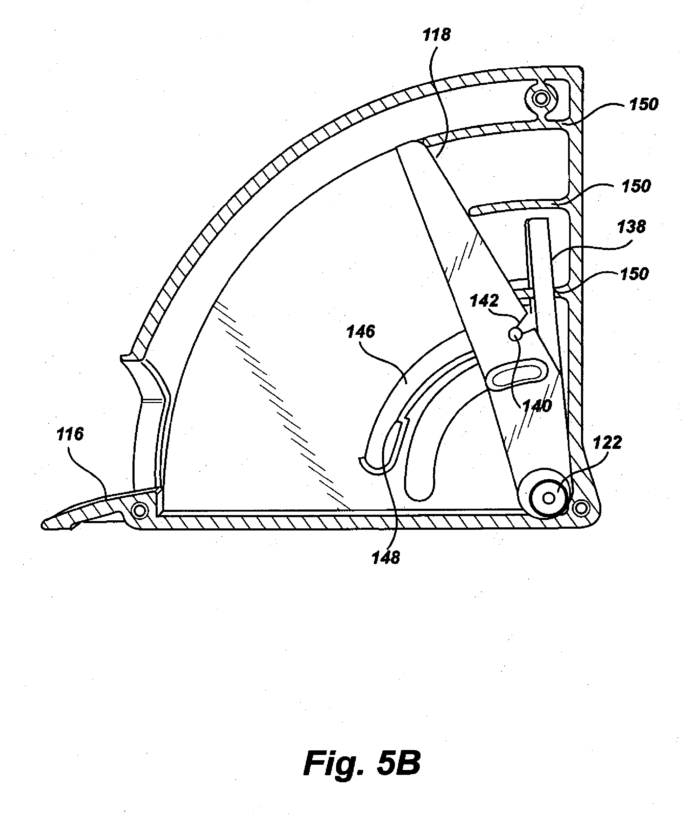

Referring to Figures 5A and 5B, perspective views of the platform in various unlatched positions in accordance with a preferred exemplary embodiment are illustrated. As shown, a corresponding channel 146 may reside in the side wall 108. In addition, a corresponding channel 146 may reside in the other side wall 110. Each channel 146 may include a lip 148. The lip 148 may be located near the bottom of the side wall 108, 110. The lip 148 may be adapted to set or position the trigger 138 and platform 118 in a latched position when a channel projection 144 extending from the trigger 138 is positioned under the lip 148. For example, a channel projection 144 may extend from two sides of the trigger 138, with each channel projection 144 setting the trigger 138 and platform 118 in the latched position. When triggered, each channel projection 144 may unlatch from the lip 148 and move along the channel 146 towards the back wall 112 of the housing 102. Thus, the lip 148 may be a retention mechanism for retaining the platform 118 in the latched or set position. During this movement, each channel projection 144 may slidingly engage with a corresponding channel 146.

Referring to Figure 2 again, the trap 100 is shown in a latched position. When setting the trap 100 in the latched position, the platform 118 (and connected trigger 138) are moved from the triggered position, e.g., when the platform 118 is biased against the back wall 112, to the latched position, e.g., when the platform 118 is positioned above the bottom 106 of the housing 102. In the latched position, the platform 118 may be adjacent to the entrance 114. To move the platform 118 from the triggered position to the latched position, a force may be applied to the tab 132 to move the platform 118 to the latched position. In other embodiments, a push bar, handle, lever, or another means for moving the platform 118 and trigger 138, may be used. When moving the platform 118 to the latched position, each channel projection 146 slides or moves in the corresponding channel 146 until the channel projection 146 catches the lip 148. When an animal, such as a mouse, enters the trap 100 via the entrance 114, the animal crosses the ramp 146 and steps on the platform 118. When the animal triggers the trigger 138, e.g., each channel projection 144 unlatches from the lip 148 in the channel 146 and the biasing element 126 causes the platform 118 (and animal) to move towards the back wall 112 of the trap 100. For example, when a mouse brushes or pushes the trigger 138 upwards, the trigger 138 is triggered and the platform 118 and mouse move towards the back wall 112 where the mouse is trapped between the platform 118 and the back wall 112 of the housing 102.

Referring to Figures 5A and 5B again, the trap 100 may include one or more blunt fingers 150, e.g., protrusions. As shown, the blunt fingers 150 extend, e.g., laterally, from the back wall 112. In other embodiments, one or more blunt fingers may extend, e.g., laterally, from the first side wall 108 and/or the second side wall 110. In other embodiments, the one or more blunt fingers may extend from the top 104 of the housing 102. The blunt fingers 150 may assist in trapping an animal within the trap 100. For example, when the trap 100 is triggered as recited above, the biasing element 128 biases the platform 118 towards the back wall 112, the mouse may contact the one or more blunt fingers 150. As shown in Figures 2, 5A and 5B, the trigger 138 may include one or more slots 152 which allow the blunt fingers 150 to pass through the trigger 138. Depending on the configuration of the blunt fingers 150, the mouse may be trapped within the trap 100 between the platform 118 and the one or more blunt fingers 150. The one or more blunt fingers 150 may be adapted to impale the animal or to assist in trapping the animal without impaling the animal. In other embodiments of the trap 100 that do not include blunt fingers 150, the animal may be trapped between the platform 118 and the back wall 112. In other embodiments, e.g., the traps 600, 700, 800 recited below, may include one or more blunt fingers 150. An animal, such as a mouse, may be trapped between the platform of the traps and one or more blunt fingers 150 as recited above.

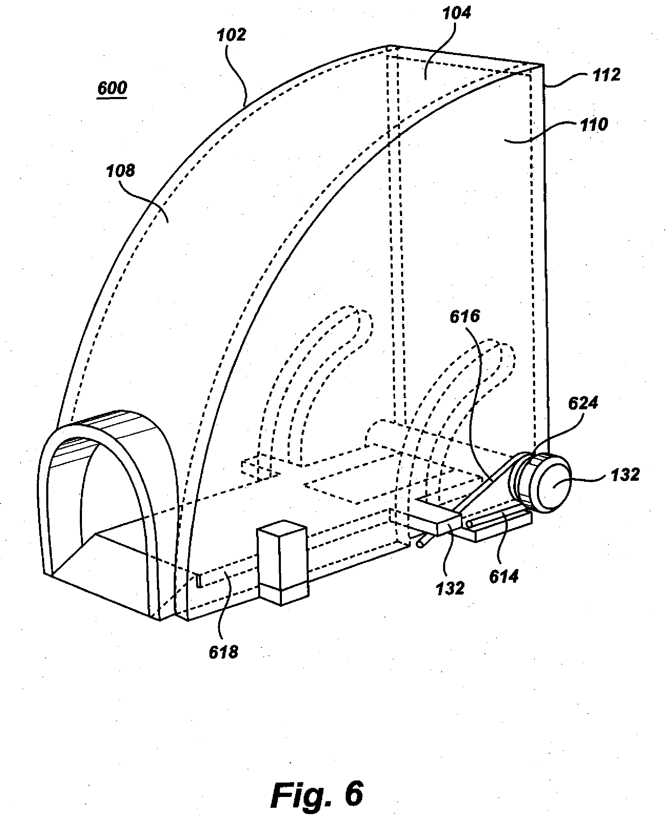

Referring to Figure 6, a perspective view of a trap in accordance with another exemplary embodiment is illustrated. It should be appreciated that trap 600 is a simplified view of another embodiment of the trap 100 illustrated in Figure 1 and may include additional elements that are not depicted. The trap 600 illustrated in Figure 6 is similar to the trap 100 illustrated in Figure 1. For example, the housing 102 is similar and the platform 618 is pivotally coupled to the housing 102. However, the platform 618 and trigger 638 in Figure 6 differ from the platform 118 and trigger 138 in Figure 1. In other embodiments, other platforms and/or triggers may be used where the platform moves from a latched position towards the back wall 112 of the housing 102 when the trigger is triggered.

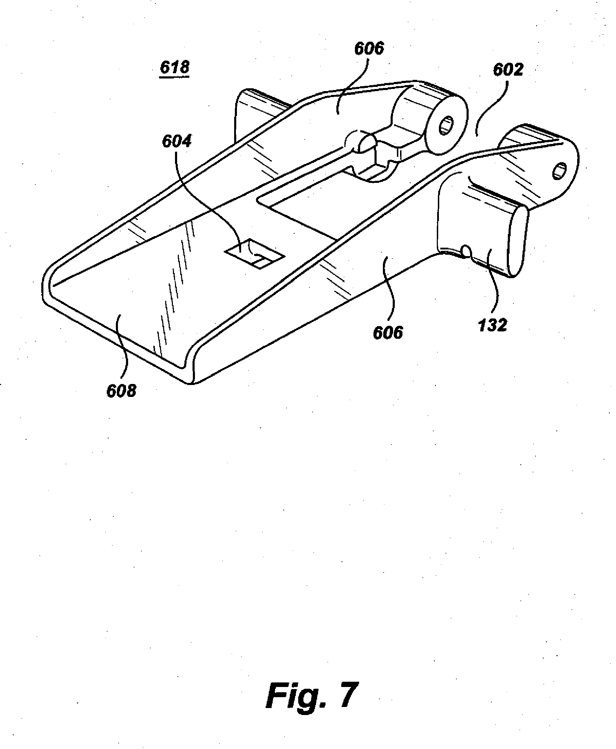

Referring to Figure 7, a perspective view of the platform 618 in accordance with an other exemplary embodiment is illustrated. As shown, the platform 618 may include a cutout 602, an aperture 604, sides 606, and a surface 608. The cutout 602 may be adapted to receive a trigger 638 (discussed in further detail below). The aperture 604 may be adapted to receive a catch tab 610 of a catch 612 (discussed in further detail below). The sides 606 may assist in positioning an animal on the platform 618 by directing the animal towards the center of the platform 618. The surface 608 of the platform 618 may be flat or angled. For example, the surface 608 of the platform 618 may be angled and continue the incline of the ramp 116.

Referring to Figure 6 again, the trap 600 may include a biasing element 624 to bias the platform 618 towards the back wall 112. As shown, the biasing element 624 may be a spring, such as a tension spring, operatively coupled to the rod 120. The biasing element 624 may be positioned between the exterior of a side wall, such as the second side wall 110, and a nut 122. As shown, the biasing element 624 may have a first end 614 anchored or tensioned against the bottom 106 of the housing 102 and a second end 616 anchored or tensioned against the tab 132 of the platform 618. In other embodiments, the biasing element 624 may be positioned within the housing 102. For example, the biasing element 624 may be positioned in the interior of the housing 102 with the first end 614 and second end 616 of the biasing element 624 residing inside the housing 102 as well. In other embodiments, other biasing elements may be used to bias the platform 618 towards the back wall 112 of the housing 102.

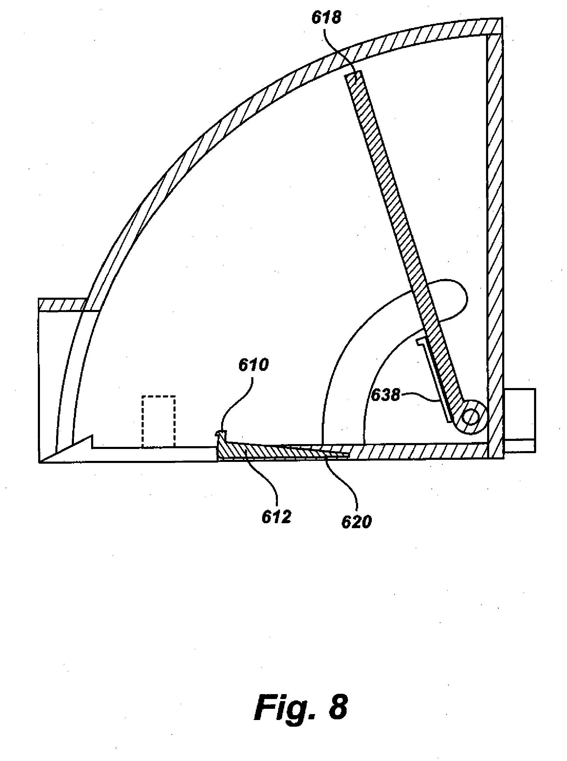

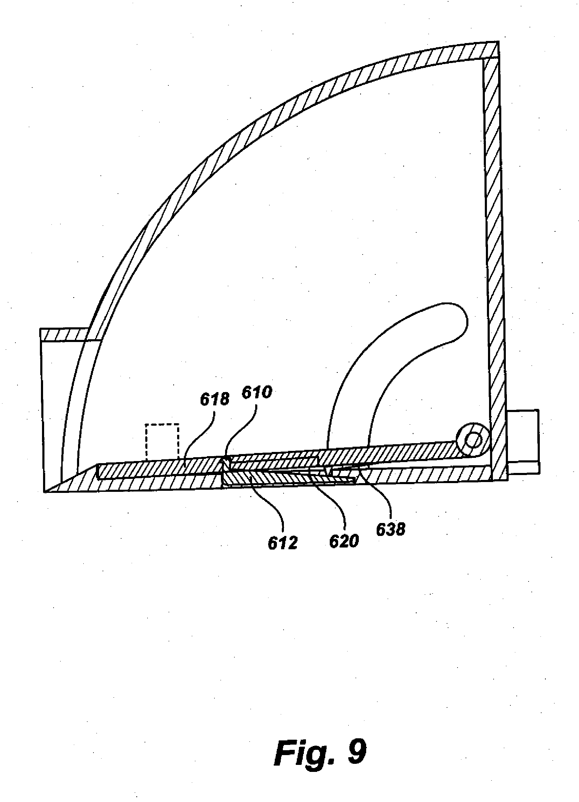

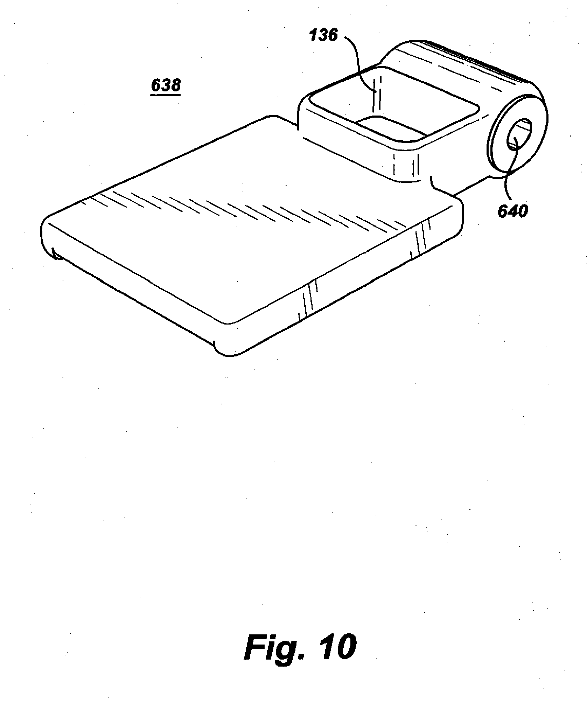

Referring to Figures 8 and 9, side views of the trap with the platform in the triggered position and in the latched position, respectively, in accordance with exemplary embodiments are illustrated. As shown, the trap 600 may include a trigger (or trigger mechanism) 638 embedded in the platform 618, e.g., in the cutout 602 of the platform 618, and a catch 612 positioned below the platform 618. The trigger 638 may be operatively coupled to the housing 102. For example, the trigger 638 may include a slot 640 (as shown in Figure 10) which may receive the rod 120, thus pivotally connecting the trigger 638 to the housing 102. As shown in Figure 8, when the platform 618 is in the triggered position, the trigger 638 may move with the platform 618 since the trigger 638 is embedded in the platform 618 and is pivotally coupled to the rod 120. The trigger 638 may be pivotally coupled to the rod 120 such that when the platform 618 is in the latched position, the trigger is approximately flush with the surface 608 of the platform 618 and may be adjacent the entrance 114. The trigger 638 may include a downward protrusion or tab 620 at one end of the trigger 638 with the downward protrusion 620 extending downward towards the bottom 106 of the housing 102 when the platform 618 is in the latched position. The trigger 638 may be adapted to be operatively coupled to the catch 612 in the latched position. As shown in Figure 9, when the platform 618 is in the latched position, the downward protrusion 620 may either be in contact or proximate to the catch 612. The trigger 638 may be pivotally positioned such that when the platform 618 is in the latched position and weight is placed on the trigger 638, e.g., a mouse steps on the trigger 638, the trigger 638 may pivot downward. In response to the trigger 638 pivoting downwardly, the catch 612 may move, e.g., pivoting away from the aperture 604 in the platform 618, releasing the platform 618. The biasing element 624 may cause the platform 618 to move towards the back wall 112. As a result, the animal, e.g., mouse, may be trapped between the platform 618 and the back wall 112. If the housing 102 includes the one or more blunt fingers 150 as described above with reference to trap 100, the animal, e.g., mouse, may be trapped between the platform 618 and one or more blunt fingers 150.

Referring to Figure 10, a perspective view of a trigger 638 in accordance with an exemplary embodiment is illustrated. As shown, the trigger 638 may include an attractant reservoir 136 configured to hold an attractant (not shown). The attractant may be a scent, a rodenticide, and/or bait. The back wall 112, first side wall 108, and/or second side wall 110 may include an opening (not shown) to allow an attractant to be placed in the attractant reservoir 136. For example, using a knife, peanut butter or cheese may be placed in the attractant reservoir 136 to assist in attracting an animal, such as a mouse, to the trap 100.

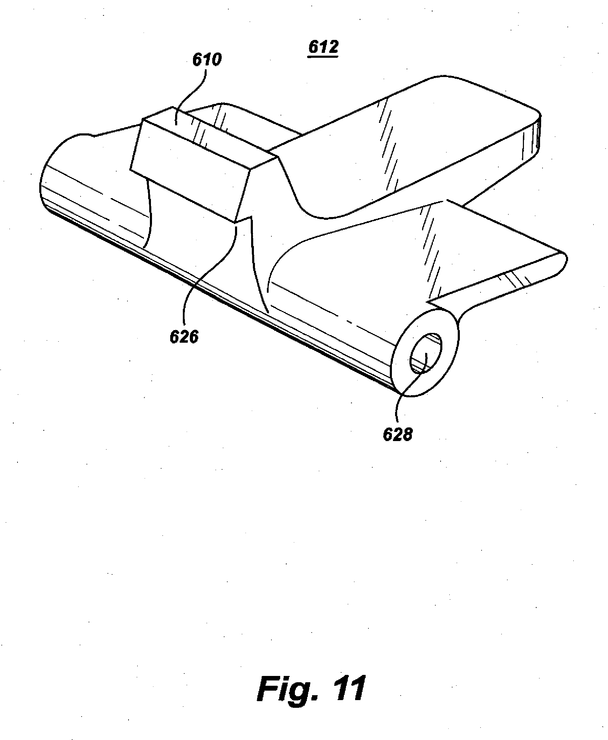

Referring to Figure 11, a perspective view of a catch 612 in accordance with an exemplary embodiment is illustrated. As shown, the catch 612 may include an upward protrusion or catch tab 610 with a lip 626 adapted to engage the aperture 604 in the platform 618 and to assist in retaining the platform 618 in the latched position. Thus, the lip 626 may be a retention mechanism for retaining the platform 618 in the latched or set position. The platform 618 may be adapted, near the aperture 604, to receive the catch tab 610 and lip 626 such that the lip 626 may engage the platform 618 when the catch 612 is positioned to retain the platform 618 in the latched position. The catch 612 may be pivotally coupled to the housing 102. For example, the catch 612 may include a slot 628 adapted to receive a rod (not shown) which may be anchored in either the bottom 106 of the housing 102 or to the housing 102, e.g., to the first and second side walls 108, 110. By pivoting the catch 612, the catch 612 may engage the platform 618, e.g., the catch tab 610 may protrude through the aperture 604 in the platform 618 and retain the platform 618 in the latched position. When a force is applied to the trigger 638 (e.g., an animal steps on the trigger 638), the trigger 638 pivots downward causing the downward protrusion 620 of the trigger 638 to force the catch 612 to pivot or move, thereby causing the lip 626 of the upward catch tab 610 to unlatch or disengage from the platform 618, thereby releasing the platform 618 to move towards the back wall 112 due to the biasing element 624.

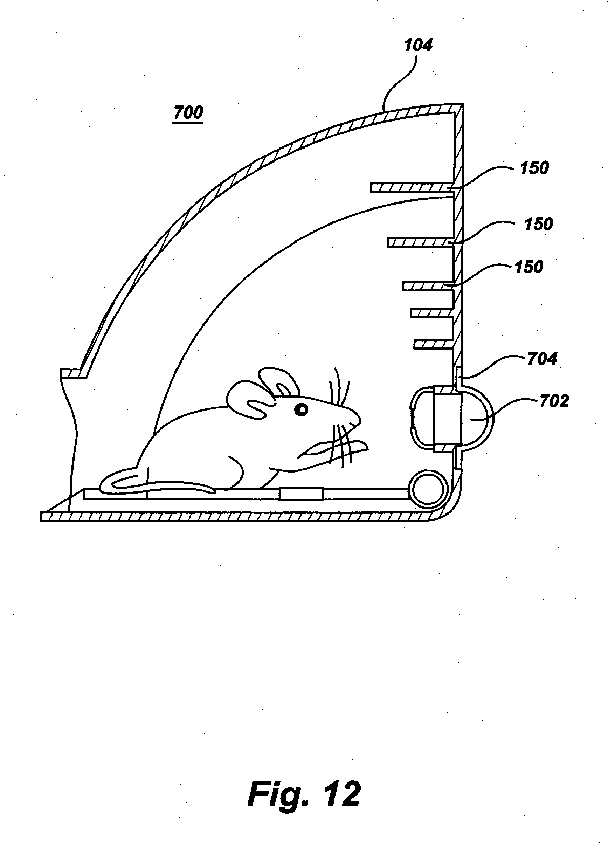

Referring to Figure 12, a side view of a trap, in the latched position, having a blister pack in accordance with an exemplary embodiment is illustrated. As shown, the trap 700 may include a blister pack 702 operatively coupled to the back wall 112. The blister pack 702 may include an attractant, such as a scent, rodenticide, and/or bait. The back wall 112 may include an opening 704 adapted to receive the blister pack 702. The use of opening 704 may allow for the replacement of the blister pack 702. For example, if the trap 700 has not trapped an animal for a period of time, the existing blister pack 702 may be replaced with other another blister pack 702 having a different attractant.

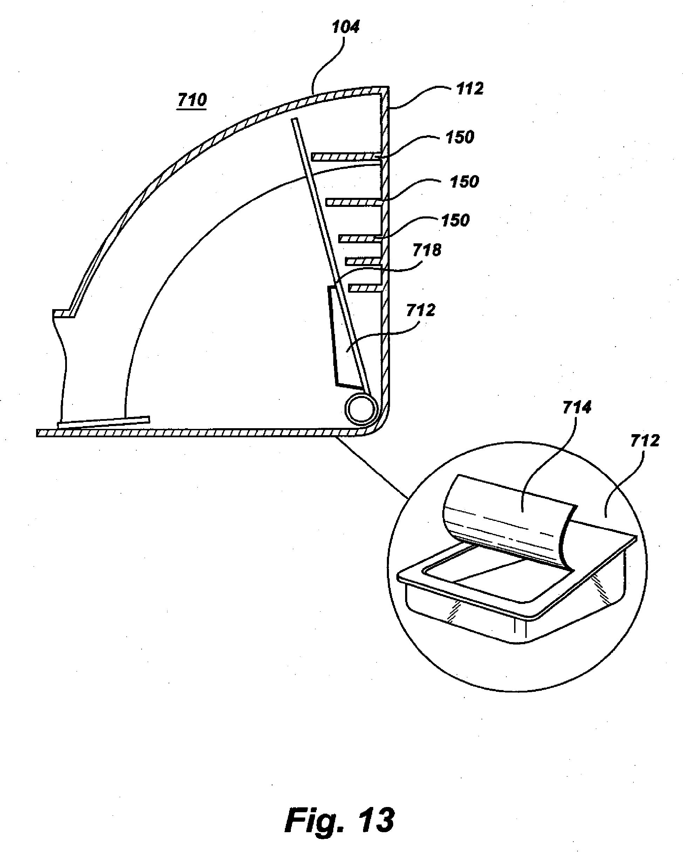

Referring to Figure 13, a side view of a trap, in the triggered position, having a bait trap in accordance with an exemplary embodiment is illustrated. As shown, the platform 718 may be configured to include a bait trap 712 for attracting an animal into the trap 710. The bait trap 712 may include a removable cover or flap 714 which when opened, e.g., pulled off or back, bait inside the bait trap 712 may be exposed. In other embodiments, the bait trap 712 may include other attractants, such as scents or rodenticide. The flap 714 may be operatively coupled to the back wall 112 with the platform 718 in the triggered position when sold, thus when the platform 718 is moved to the latched position, the removable cover or flap 714 may peel off or back exposing the bait.

In preferred embodiments, the traps are configured for a single use. Accordingly, it is preferred that the trap and its members or components are made of a relatively inexpensive material, such as a thin-walled rigid polymeric material that may be injection molded in to the desired shapes. For example, the housing 102 may preferably be made of a polymeric material, such as rigid styrene polymers and co-polymers. Other suitable materials include acrylonitrile-butadiene-styrene (ABS), or polyvinyl-chloride (PVC). It is appreciated that other suitable polymeric materials, and/or suitable non-polymeric materials, may be selected for the construction of the trap or its component parts.

In certain exemplary embodiments, each of the component described herein are injection molded to a desired shape. In some exemplary embodiments, each component may be molded as a single, unitary molded part. In other exemplary embodiments, the component may be molded in multiple parts that are joined or attached together to form the component. The various means for designing molds, and joining various parts to form one component will be understood by one familiar with such processes and parts.

Although various embodiments of the traps are illustrated, the traps are not limited to the disclosed embodiments. For example, a trap may include different triggers and/or platforms. In such embodiments, the animal may position itself on a platform and triggers the trap. When triggered, a biasing element causes the platform to pivot towards the back wall of the trap thereby trapping the animal between the platform and back wall (or numbing fingers).

In the preceding specification, various embodiments have been described with reference to the accompanying drawings. It will, however, be evident that various modifications and changes may be made thereto, and additional embodiments may be implemented, without departing from the claims that follow. The specification and drawings are accordingly to be regarded in an illustrative sense.

## Claims

1. Trap comprising
- a housing (102) having at least one entrance (114) formed therein to allow an animal to pass into the housing,
the housing (102) having a plurality of walls (104-112) and the at least one entrance (114) providing a passageway into the housing (102);
- a platform (118) pivotally coupled to the housing (102);
- a trigger mechanism (138) operatively coupled to the platform that, when triggered by an animal, triggers the platform (118) to pivot towards the housing (102),
wherein the trigger mechanism (138) has a latched position in which the platform is adjacent to the entrance (114) and a triggered position in which the platform (118) is biased towards one wall (112) of said plurality of walls (104-112), thereby trapping the animal against the housing within an enclosure.

2. Trap of claim 1, further comprising a biasing element (124) biasing the platform (118) towards the housing (102), preferably the biasing element is a spring.

3. Trap of claim 1, further comprising a handle (132) operatively coupled to the platform (118) and extending outside the housing (102), when the handle is actuated, the platform (118) moves to a position adjacent to the entrance (114).

4. Trap of claim 1 wherein the housing (102) further comprises at least one blunt finger (150) coupled to the housing (102) and configured to trap the animal between at least one blunt finger and the platform (118) when the trigger mechanism (138) is triggered.

5. Trap of claim 1 wherein the trigger mechanism (138) further comprises at least one channel projection (144) with each projection interacting with a corresponding channel on the housing (102) to set the platform (118) adjacent to the entrance (114) and when the animal triggers the trigger mechanism (138), the platform (118) pivots towards the housing.

6. Trap of claim 1 wherein the trigger mechanism (138) further comprises a catch (612) configured to retain the platform (118) adjacent to the entrance (114) and when the animal triggers the trigger mechanism (138), the platform (118) pivots towards the housing (102).

7. Trap of claim 6 wherein a downward force on the trigger mechanism (138) forces the trigger mechanism to move down and forces the catch (612) to move thereby triggering the platform (118) to move from the latched position to the triggered position.

8. Trap of claim 1 further comprising at least one blunt finger (150) coupled to the housing (102) and configured to trap the animal between at least one blunt finger and the platform (118) when the platform moves from the latched position to the triggered position, preferably the blunt finger(s) are provided at a back wall (112) of the housing (102).

9. Trap of claim 1, further comprising a handle (132) operatively coupled to the platform (118) and extending outside the housing (102), the handle is moveable to assist in moving the platform (118) from the triggered position, in which the platform is biased towards one wall (112), to the latched position, in which the platform (118) is adjacent to the entrance (114).

10. Trap of claim 1, wherein the trigger mechanism (138) further comprises at least one channel projection (144), with each channel projection slidingly engaged with a corresponding channel (146) on a side wall (108, 110) of the walls (104-112) of the housing (102), the channel further comprising a lip (148) adapted to receive the channel projection (144) and position the trigger mechanism and platform (118) in a latched position.

11. Trap of claim 10, wherein the channel projection (144) disengages from the lip (148) of the channel in response to a force upon the trigger mechanism, thereby causing the platform (118) to move from the latched position to the triggered position.

12. Trap of claim 1, further comprising a catch operatively coupled to the platform (118) and the trigger mechanism (138), the catch having a latched position in which the catch retains the platform (118) in the latched position and a triggered position in which the catch releases the platform.

13. Trap of claim 1, further comprising an attractant coupled to the platform (118) and the attractant further comprising a cover operatively coupled to the housing (102), wherein moving the platform (118) from the triggered position to the latched position, the cover is removed exposing the attractant.

14. Trap of claim 1, wherein
- the plurality of walls (104-112) of the housing (102) is a top, a bottom, a first side wall, a second side wall, and a back wall,
- the entrance (114) provides a passageway into the housing (102);
- the platform (118) resides above the bottom of the housing (102) and adjacent to the entrance (114) in a set position;
wherein the trap further comprises
- at least one numbing finger coupled to the housing (102) with each numbing finger extending laterally towards the entrance (114);
- a biasing element biasing the platform (118) towards the back wall;
and wherein
- the trigger mechanism (138), when triggered by an animal, releases the platform (118) to pivot from the set position towards the rear wall due to the biasing element, and thereby traps the animal between the platform (118) and at least one numbing finger.

## Patentansprüche

1. Falle, umfassend
- ein Gehäuse (102), das mindestens einen Eingang (114) aufweist, der darin ausgebildet ist, um einem Tier zu ermöglichen, in das Gehäuse zu gelangen,
wobei das Gehäuse (102) mehrere Wände (104-112) aufweist und der mindestens eine Eingang (114) einen Durchgang in das Gehäuse (102) bereitstellt;
- eine Plattform (118), die schwenkbar mit dem Gehäuse (102) verbunden ist;
- einen Auslösemechanismus (138), der mit der Plattform wirkverbunden ist, der, wenn er durch ein Tier ausgelöst wird, die Plattform (118) auslöst, um in Richtung des Gehäuses (102) zu schwenken,
wobei der Auslösemechanismus (138) eine verriegelte Position, in der sich die Plattform neben dem Eingang (114) befindet, und eine ausgelöste Position, in der die Plattform (118) zu einer Wand (112) der mehreren Wände (104- 112) vorgespannt ist, aufweist, wodurch das Tier gegen das Gehäuse innerhalb einer Umhüllung gefangen wird.

2. Falle nach Anspruch 1, ferner umfassend ein Vorspannelement (124), das die Plattform (118) in Richtung des Gehäuses (102) vorspannt, wobei das Vorspannelement vorzugsweise eine Feder ist.

3. Falle nach Anspruch 1, ferner umfassend einen Griff (132), der mit der Plattform (118) wirkverbunden ist und sich außerhalb des Gehäuses (102) erstreckt, wenn der Griff betätigt wird, wobei sich die Plattform (118) zu einer Position benachbart des Eingangs (114) bewegt.

4. Falle nach Anspruch 1, wobei das Gehäuse (102) ferner mindestens einen stumpfen Finger (150) umfasst, der mit dem Gehäuse (102) gekoppelt ist und zum Fangen des Tiers zwischen mindestens einem stumpfen Finger und der Plattform (118) konfiguriert ist, wenn der Auslösemechanismus (138) ausgelöst wird.

5. Falle nach Anspruch 1, wobei der Auslösemechanismus (138) ferner mindestens einen Kanalvorsprung (144) umfasst, wobei jeder Vorsprung mit einem entsprechenden Kanal an dem Gehäuse (102) zusammenwirkt, um die Plattform (118) benachbart des Eingangs (114) einzustellen und wenn das Tier den Auslösemechanismus (138) auslöst, die Plattform (118) in Richtung des Gehäuses zu schwenken.

6. Falle nach Anspruch 1, wobei der Auslösemechanismus (138) ferner eine Arretierung (612) umfasst, die konfiguriert ist, um die Plattform (118) benachbart des Eingangs (114) zu halten, und wenn das Tier den Auslösemechanismus (138) auslöst, die Plattform (118) in Richtung des Gehäuses (102) zu schwenken.

7. Falle nach Anspruch 6, wobei eine Abwärtskraft auf den Auslösemechanismus (138) den Auslösemechanismus veranlasst, sich nach unten zu bewegen und die Arretierung (612) veranlasst, sich zu bewegen und dadurch die Plattform (118) auszulösen, um sich von der verriegelten Position zu der ausgelösten Position zu bewegen.

8. Falle nach Anspruch 1, ferner umfassend mindestens einen stumpfen Finger (150), der mit dem Gehäuse (102) gekoppelt ist und zum Fangen des Tiers zwischen mindestens einem stumpfen Finger und der Plattform (118) konfiguriert ist, wenn sich die Plattform von der verriegelten Position zu der ausgelösten Position bewegt, wobei der bzw. die stumpfen Finger vorzugsweise an einer Rückwand (112) des Gehäuses (102) bereitgestellt sind.

9. Falle nach Anspruch 1, ferner umfassend einen Griff (132), der mit der Plattform (118) wirkverbunden ist und sich außerhalb des Gehäuses (102) erstreckt, wobei der Griff beweglich ist, um das Bewegen der Plattform (118) von der ausgelösten Position, in der die Plattform in Richtung einer Wand (112) vorgespannt ist, zu der verriegelten Position zu bewegen, in der die Plattform (118) benachbart des Eingangs (114) ist.

10. Falle nach Anspruch 1, wobei der Auslösemechanismus (138) ferner mindestens einen Kanalvorsprung (144) umfasst, wobei jeder Kanalvorsprung gleitend mit einem entsprechenden Kanal (146) an einer Seitenwand (108, 110) der Wände (104-112) des Gehäuses (102) in Eingriff gebracht wird, wobei der Kanal ferner eine Lippe (148) umfasst, die zum Aufnehmen des Kanalvorsprungs (144) und zum Positionieren des Auslösemechanismus und der Plattform (118) in einer verriegelten Position ausgelegt ist.

11. Falle nach Anspruch 10, wobei der Kanalvorsprung (144) als Reaktion auf eine Kraft auf den Auslösemechanismus von der Lippe (148) des Kanals außer Eingriff gebracht wird, wodurch bewirkt wird, dass sich die Plattform (118) von der verriegelten Position zu der ausgelösten Position bewegt.

12. Falle nach Anspruch 1, ferner umfassend eine Arretierung, die mit der Plattform (118) und dem Auslösemechanismus (138) wirkverbunden ist, wobei die Arretierung eine verriegelte Position aufweist, in der die Arretierung die Plattform (118) in der verriegelten Position hält, und eine ausgelöste Position, in der die Arretierung die Plattform freigibt.

13. Falle nach Anspruch 1, ferner umfassend ein Lockmittel, das mit der Plattform (118) gekoppelt ist, wobei das Lockmittel ferner eine Abdeckung umfasst, die mit dem Gehäuse (102) wirkverbunden ist, wobei das Bewegen der Plattform (118) von der ausgelösten Position zu der verriegelten Position die Abdeckung entfernt und das Lockmittel exponiert.

14. Falle nach Anspruch 1,
- wobei die mehreren Wände (104-112) des Gehäuses (102) eine Oberseite, eine Unterseite, eine erste Seitenwand, eine zweite Seitenwand und eine Rückwand sind,
- der Eingang (114) einen Durchgang in das Gehäuse (102) bereitstellt;
- die Plattform (118) auf der Unterseite des Gehäuses (102) und benachbart des Eingangs (114) in einer eingestellten Position aufliegt;
wobei die Falle ferner umfasst:
- mindestens einen Betäubungsfinger, der mit dem Gehäuse (102) gekoppelt ist, wobei sich jeder Betäubungsfinger lateral in Richtung des Eingangs (114) erstreckt;
- ein Vorspannelement die Plattform (118) in Richtung der Rückwand vorspannt;
und wobei
- der Auslösemechanismus (138), wenn er durch ein Tier ausgelöst wird, die Plattform (118) freigibt, um aufgrund des Vorspannelements von der eingestellten Position in Richtung der Rückwand zu schwenken und dadurch das Tier zwischen der Plattform (118) und dem mindestens einen Betäubungsfinger zu fangen.

## Revendications

1. Piège comprenant
- un boîtier (102) ayant au moins une entrée (114) formée à l'intérieur pour permettre à un animal de passer dans le boîtier,
le boîtier (102) ayant une pluralité de parois (104-112) et la au moins une entrée (114) fournissant un passage dans le boîtier (102);
- une plate-forme (118) couplée de manière pivotante au boîtier (102);
- un mécanisme de déclenchement (138) couplé fonctionnellement à la plate-forme qui, lorsqu'il est déclenché par un animal, entraîne le pivotement de la plate-forme (118) en direction du boîtier (102),
dans lequel le mécanisme de déclenchement (138) a une position verrouillée dans laquelle la plate-forme est adjacente à l'entrée (114) et une position déclenchée dans laquelle la plate-forme (118) est orientée vers une paroi (112) de ladite pluralité de parois (104-112), piégeant ainsi l'animal contre le boîtier à l'intérieur d'une enceinte.

2. Piège selon la revendication 1, comprenant en outre un élément de sollicitation (124) sollicitant la plate-forme (118) vers le boîtier (102), de préférence l'élément de sollicitation est un ressort.

3. Piège selon la revendication 1, comprenant en outre une poignée (132) couplée fonctionnellement à la plate-forme (118) et s'étendant à l'extérieur du boîtier (102), lorsque la poignée est actionnée, la plate-forme (118) se déplace vers une position adjacente à l'entrée (114).

4. Piège selon la revendication 1, dans lequel le boîtier (102) comprend en outre au moins un doigt contondant (150) couplé au boîtier (102) et configuré pour piéger l'animal entre au moins un doigt contondant et la plate-forme (118) lorsque le mécanisme de déclenchement (138) est déclenché.

5. Piège selon la revendication 1, dans lequel le mécanisme de déclenchement (138) comprend en outre au moins une saillie de canal (144), chaque saillie interagissant avec un canal correspondant sur le boîtier (102) pour placer la plate-forme (118) adjacente à l'entrée (114) et lorsque l'animal déclenche le mécanisme de déclenchement (138), la plate-forme (118) pivote vers le boîtier.

6. Piège selon la revendication 1, dans lequel le mécanisme de déclenchement (138) comprend en outre un loquet (612) configuré pour retenir la plate-forme (118) adjacente à l'entrée (114) et lorsque l'animal déclenche le mécanisme de déclenchement (138), la plate-forme (118) pivote vers le boîtier (102).

7. Piège selon la revendication 6, dans lequel une force vers le bas sur le mécanisme de déclenchement (138) force le mécanisme de déclenchement à se déplacer vers le bas et force le loquet (612) à se déplacer, entraînant ainsi la plate-forme (118) à se déplacer de la position verrouillée à la position déclenchée.

8. Piège selon la revendication 1 comprenant en outre au moins un doigt contondant (150) couplé au boîtier (102) et configuré pour piéger l'animal entre au moins un doigt contondant et la plate-forme (118) lorsque la plate-forme se déplace de la position verrouillée à la position déclenchée, de préférence le ou les doigts contondants sont prévus sur une paroi arrière (112) du boîtier (102).

9. Piège selon la revendication 1, comprenant en outre une poignée (132) couplée fonctionnellement à la plate-forme (118) et s'étendant à l'extérieur du boîtier (102), la poignée peut être déplacée pour aider à déplacer la plate-forme (118) de la position déclenchée, dans laquelle la plate-forme est orientée vers une paroi (112), à la position verrouillée, dans laquelle la plate-forme (118) est adjacente à l'entrée (114).

10. Piège selon la revendication 1, dans lequel le mécanisme de déclenchement (138) comprend en outre au moins une saillie de canal (144), chaque saillie de canal étant en contact coulissant avec un canal correspondant (146) sur une paroi latérale (108, 110) des parois (104-112) du boîtier (102), le canal comprenant en outre une lèvre (148) adaptée pour recevoir la saillie de canal (144) et positionner le mécanisme de déclenchement et la plate-forme (118) dans une position verrouillée.

11. Piège selon la revendication 10, dans lequel la saillie de canal (144) se déconnecte de la lèvre (148) du canal en réponse à une force sur le mécanisme de déclenchement, amenant ainsi la plate-forme (118) à se déplacer de la position verrouillée à la position déclenchée.

12. Piège selon la revendication 1, comprenant en outre un verrou couplé fonctionnellement à la plate-forme (118) et au mécanisme de déclenchement (138), le verrou ayant une position verrouillée dans laquelle le verrou maintient la plate-forme (118) dans la position verrouillée et une position déclenchée dans laquelle le verrou libère la plate-forme.

13. Piège selon la revendication 1, comprenant en outre un attractif couplé à la plate-forme (118) et l'attractif comprenant en outre un couvercle couplé fonctionnellement au boîtier (102), dans lequel lors du déplacement de la plate-forme (118) de la position déclenchée à la position verrouillée, le couvercle est retiré exposant l'attractif.

14. Piège selon la revendication 1, dans lequel
- la pluralité de parois (104-112) du boîtier (102) comporte une paroi supérieure, une paroi inférieure, une première paroi latérale, une seconde paroi latérale et une paroi arrière,
- l'entrée (114) fournit un passage dans le boîtier (102) ;
- la plate-forme (118) réside au-dessus du fond du boîtier (102) et adjacente à l'entrée (114) dans une position définie;
dans laquelle le piège comprend en outre
- au moins un doigt engourdissant couplé au boîtier (102), chaque bras paralysant s'étendant latéralement vers l'entrée (114);
- un élément de sollicitation sollicitant la plate-forme (118) vers la paroi arrière;
et où
- le mécanisme de déclenchement (138), lorsqu'il est déclenché par un animal, libère la plate-forme (118) pour pivoter de la position réglée vers la paroi arrière en raison de l'élément de sollicitation, et piège ainsi l'animal entre la plate-forme (118) et au moins un bras paralysant.
